# EUROPEAN PATENT APPLICATION

(11) **EP 4 606 842 A1**
(43) Date of publication of application: **27.08.2025**
(21) Application number: 23879874.8
(22) Date of filing: 19.10.2023
(51) Int. Cl.: C08J 5/04

(54) **COMPOSITE SHEET, METHOD FOR PRODUCING COMPOSITE SHEET, AND MOLDED BODY**

(30) Priority: 19.10.2022 JP 2022167888
(71) Applicant: Mitsubishi Chemical Corporation, Tokyo 100-8251 (JP); Mitsubishi Chemical Advanced Materials Japan Ltd., Tokyo 103-0021 (JP)
(72) Inventor: KITA, Hijiri, Yokkaichi-shi, Mie 510-0051 (JP); SATO, Fumiharu, Yokkaichi-shi, Mie 510-0051 (JP); MATSUI, Jun, Tokyo 100-8251 (JP); TAKATA, Nobuaki, Tokyo 100-8251 (JP)
(74) Representative: Vossius & Partner Patentanwälte Rechtsanwälte mbB
(86) International application number: PCT/JP2023/037885
(87) International publication number: WO 2024/085231

(57) **Abstract**

Provided is a composite sheet containing a thermoplastic resin composition (X) and inorganic fibers (Y), in which the thermoplastic resin composition (X) contains a thermoplastic resin and a thermally expandable flame retardant, and the composite sheet has a density of 1.3 g/cm³ or less. It is possible to provide a composite sheet having high flame shielding property and light weight property.

## Description

### Technical Field

The present invention relates to a composite sheet, a method for producing the composite sheet, and a molded body obtained by molding the composite sheet.

### Background Art

In recent years, as part of environmental measures, research and development of electric vehicles and hybrid vehicles have been advanced, and development of high energy density batteries and weight reduction for the purpose of improving cruising distances have been actively advanced. Such a high energy density battery may catch fire due to an unexpected accident, and its housing material is required to have high flame shielding property as a safety measure for passengers, and therefore, a metal material such as iron and a fireresistant material are often used in combination.

However, the metal material has a drawback of being heavy, and when the refractory material is used in combination, there is a problem of an increase in cost due to processability and an increase in the number of parts. Therefore, resinification having a possibility of achieving both weight reduction and flame shielding property has been attempted. At present, for sustainable society, suppression of carbon dioxide and recyclability are becoming important. Many thermosetting materials have high flame retardancy and are common as composite materials. However, thermoplastic resin materials are advantageous in terms of recyclability.

Further, in China, a safety standard of GB 38031-2020 "Electric Vehicles Traction Battery Safety requirements" has been announced, and it is required to issue a warning five minutes before thermal runaway of the battery, but it is considered that this can also be achieved by a housing material that shields flame for five minutes or more after ignition of the battery.

To solve these problems, for example, PTL 1 proposes a carbon fiber-reinforced polypropylene resin to which a bromine-based flame retardant or an antimony oxide compound is added. However, the additive used here has a problem of biopersistence.

On the other hand, as a technique for imparting flame retardancy to a polypropylene-based resin in consideration of biopersistence, PTL 2 proposes a flame-retardant polyolefin-based composition in which a (poly)phosphate compound is contained in a polyolefin-based resin.

In addition, PTL 3 proposes a flame-retardant resin composition in which a glass long fiber and a phosphate compound are contained in a polypropylene resin.

### Citation List

### Patent Literature

PTL 1: JP 2014-62189 A
PTL 2: JP 2013-119575 A
PTL 3: JP 2011-88970 A

### Summary of Invention

### Technical Problem

There are many insufficient points in a conventional fiber-reinforced composite material technology having a possibility of satisfying both weight reduction and flame shielding property of a battery of high energy density. Specifically, the fiber-reinforced composite material is required to have high flame shielding property and further improvement in light weight property.

The present invention has been made to solve the above-described problems, and an object of the present invention is to provide a molded body having high flame shielding property and light weight property, and a composite sheet for obtaining the molded body.

### Solution to Problem

In order to solve the above-mentioned problems, the present inventors have found that a composite sheet containing a thermoplastic resin and inorganic fibers, which is obtained by incorporating a thermally expandable flame retardant into the thermoplastic resin, and a molded body obtained by molding the composite sheet can solve the above-mentioned problems, and have completed the present invention based on these findings.

That is, aspects of the present invention provide the following [1] to [15].
[1] A composite sheet containing a thermoplastic resin composition (X) and inorganic fibers (Y), in which the thermoplastic resin composition (X) contains a thermoplastic resin and a thermally expandable flame retardant, and the composite sheet has a density of 1.3 g/cm³ or less.
[2] The composite sheet according to [1], in which a plurality of voids having a cross-sectional area of 0.01 mm² or more are present when a cut surface is observed, and an average value of the cross-sectional areas of the voids having a cross-sectional area of 0.01 mm² or more is 0.03 mm² or more and 0.8 mm² or less.
[3] The composite sheet according to [1] or [2], in which a thickness ratio before and after heating at 1200°C for 15 minutes (thickness after high temperature test/thickness before high temperature test) is 5 times or less.
[4] The composite sheet according to any one of [1] to [3], further containing a surface sheet, in which the surface sheet contains a nonwoven fabric made of resin fibers.
[5] The composite sheet according to any one of [1] to [4], in which the thermally expandable flame retardant includes a phosphorus-based flame retardant.
[6] The composite sheet according to any one of [1] to [5], in which the thermoplastic resin constituting the thermoplastic resin composition (X) includes a polyolefin resin.
[7] The composite sheet according to any one of [1] to [6], in which the thermoplastic resin composition (X) further contains a dispersant.
[8] The composite sheet according to [7], in which the dispersant includes a copolymer of an α-olefin and an unsaturated carboxylic acid.
[9] The composite sheet according to [7] or [8], in which a content of the dispersant is more than 0 and 25 parts by mass or less with respect to 100 parts by mass of the thermally expandable flame retardant.
[10] The composite sheet according to any one of [1] to [9], in which the inorganic fibers (Y) include at least one selected from glass fibers, ceramic fibers, metal fibers, and metal oxide fibers.
[11] The composite sheet according to any one of [1] to [10], in which the composite sheet is obtained by impregnating a mat made of the inorganic fibers (Y) with the thermoplastic resin composition (X).
[12] A method for producing the composite sheet according to any one of [1] to [11], including: laminating a sheet made of the thermoplastic resin composition (X) on a mat made of the inorganic fibers (Y) to obtain a laminate; and heating and melting the laminate to impregnate the thermoplastic resin composition (X).
[13] The method for producing a composite sheet according to [12], in which the mat made of the inorganic fibers (Y) is laminated so as to be between two sheets made of the thermoplastic resin composition (X).
[14] A molded body obtained by molding the composite sheet according to any one of [1] to [11].
[15] The molded body according to [14], which is used for a battery case.

### Advantageous Effects of Invention

According to the present invention, it is possible to provide a molded body having high flame shielding property and light weight property and a composite sheet for obtaining the molded body.

### Brief Description of Drawings

Figs. 1(a) and 1(b) are each a schematic view showing a process for producing a composite sheet of the present invention.
Fig. 2 is a schematic view showing a composite sheet of Example 1.

Hereinafter, embodiments of the present invention will be described in detail, but the following description is an example of embodiments of the present invention, and the present invention is not limited to these contents in any way.

### [Composite Sheet]

The composite sheet of the present invention is characterized by containing a thermoplastic resin composition (X) and inorganic fibers (Y), the thermoplastic resin composition (X) containing a thermoplastic resin and a thermally expandable flame retardant, and the composite sheet having a density of 1.3 g/cm³ or less.

When the density of the composite sheet is 1.3 g/cm³ or less, the lightweight property, which is the problem of the present invention, is ensured. From the above viewpoint, the density of the composite sheet may be 1.2 g/cm³ or less, 1.0 g/cm³ or less, or 0.7 g/cm³ or less. On the other hand, from the viewpoint of flame shielding property and strength of the composite sheet, the density of the composite sheet is preferably 0.1 g/cm³ or more. From this viewpoint, the density of the composite sheet may be 0.2 g/cm³ or more or 0.3 g/cm³ or more.

Generally, it is expected that the flame shielding property of the composite sheet decreases as the density of the composite sheet decreases. However, the present inventors have surprisingly found that the composite sheet of the configuration of the present invention can ensure flame shielding property at a relatively low density. The reason for this is not yet clear, but it is considered that when the density of the composite sheet is 1.3 g/cm³ or less, the volume of the gap space in the composite sheet becomes large, and the thermally expandable flame retardant contained in the composite sheet of the present invention expands in the space to form dense char.

In order to make the density of the composite sheet 1.3 g/cm³ or less, there is a method of heating and expanding a resin-impregnated sheet described later, and then adjusting the space in a mold, thereby pressurizing and compressing the resin-impregnated sheet placed in the mold until the resin-impregnated sheet has a predetermined density. The heating temperature is preferably in a range of 180°C to 250°C, more preferably in a range of 200°C to 240°C, and still more preferably in a range of 210°C to 230°C. By setting the heating temperature within these ranges, moderate expansion occurs, and it is possible to obtain a composite sheet in which a decrease in strength is suppressed while setting the density to 1.3 g/cm³ or less. The method for producing the composite sheet will be described in detail below.

### [Method for Producing Composite Sheet]

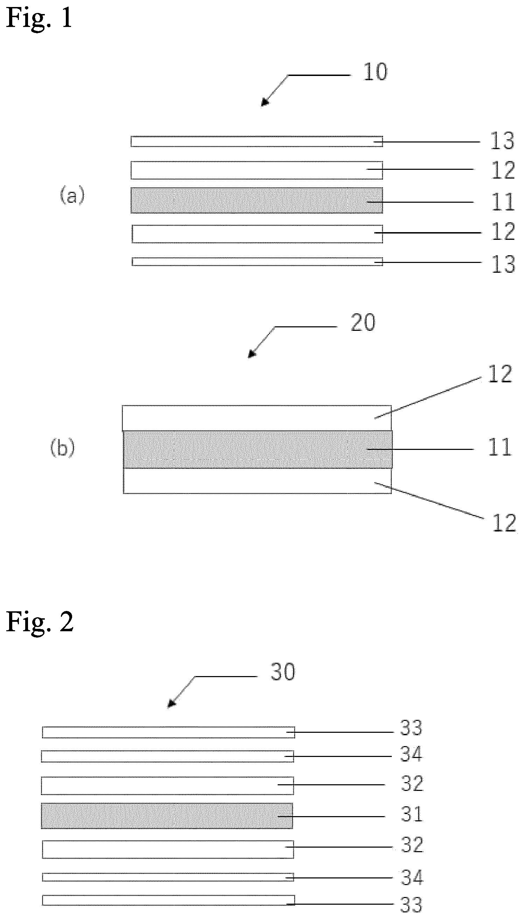

The method for producing a composite sheet of the present invention will be described in detail later, but here, the case of using a glass fiber mat, a surface sheet, and a thermoplastic resin sheet will be described for each step using Fig. 1. The following description will be made by taking, as an example, a case where glass fibers are used as the inorganic fibers (Y).

Step (a): Surface sheets 12 are stacked on both surfaces of a glass fiber mat 11, and a thermoplastic resin sheet 13 is stacked on the outside thereof. That is, the glass fiber mat 11 has a layer structure sandwiched between the surface sheets 12, and the surface sheet 12 has a layer structure sandwiched between the glass fiber mat 11 and the thermoplastic resin sheet 13 (Fig. 1(a)).

Step (b): A laminate 10 having the layer structure as described above is then heated and pressurized. By the heating and pressurizing, the thermoplastic resin sheet 13 is melted and impregnated into the voids in the glass fiber mat 11 and the voids in the surface sheet 12 to obtain a resin-impregnated sheet 20 (Fig. 1(b)).

Step (c): The resin-impregnated sheet 20 is subjected to a cooling treatment and a pressurizing treatment, and the thermoplastic resin is solidified in each of the voids in the glass fiber mat 11 and the voids in the surface sheet 12 to form a layer structure in which the surface sheet 12 is adhered to both surfaces of the glass fiber mat 11.

Step (d): The resin-impregnated sheet 20 obtained in the step (c) is subjected to a heat treatment, whereby the thermoplastic resin solidified in each of the voids in the glass fiber mat 11 and the voids in the surface sheet 12 is melted, and the glass fiber mat 11 expands due to the spring back of the fibers. Due to the spring back, the void ratio in the surface sheet 12 becomes smaller than the void ratio in the glass fiber mat 11. Thereafter, the thermoplastic resin is solidified by natural cooling in each of the voids in the glass fiber mat 11 and the voids in the surface sheet 12 to form a composite sheet having a thickness larger than that after the step (c), for example, a thickness twice or more as large as that after the step (c).

The surface sheet 12 used in the above steps is preferably a nonwoven fabric. Therefore, the composite sheet of the present invention preferably has a surface sheet 12, and the surface sheet 12 preferably includes a nonwoven fabric made of resin fibers, as shown in Fig. 1(b).

The fibers used here are preferably fibers of one resin selected from, for example, polypropylene, polyester, polyethylene, nylon, vinylon, rayon, acryl, aramid, and polylactic acid. By using a nonwoven fabric, when the thermoplastic resin sheet 13 is melted, it becomes easy to be impregnated into the voids in the glass fiber mat 11 through the voids in the surface sheet 12.

In addition, since the softening temperature of the resin fibers constituting the surface sheet 12 is higher than the softening temperature of the thermoplastic resin sheet 13, the shape of the surface sheet 12 can be maintained even when the thermoplastic resin sheet 13 is melted and the voids in the glass fiber mat 11 and the voids in the surface sheet 12 are impregnated with the thermoplastic resin.

In addition, when the thermoplastic resin is impregnated, the adhesive strength of the surface sheet 12 to the glass fiber mat 11 is increased, and the non-peelability of the surface sheet 12 can be improved.

Here, the thermoplastic resin sheet 13 is preferably formed of one resin selected from, for example, polypropylene, polyethylene, polyamide, and polyester.

In addition, in the composite sheet of the present invention, it is preferable that a plurality of voids having a cross-sectional area of 0.01 mm² or more are present when a cut surface of the composite sheet is observed, and an average value of the cross-sectional areas of the voids having a cross-sectional area of 0.01 mm² or more is 0.03 mm² or more and 0.8 mm² or less. In a case where the average value of the cross sections of the voids in the composite sheet is within the above range, it is possible to achieve both flame shielding property and light weight property at a high level. From the same viewpoint, the average value of the cross-sectional areas of the voids having a cross-sectional area of 0.01 mm² or more may be 0.05 mm² or more, or 0.1 mm² or more, or 0.15 mmm² or more, or 0.2 mm² or more, while it may be 0.7 mm² or less, or 0.6 mm² or less, or 0.5 mm² or less. The voids can be observed and the cross-sectional area can be measured by cutting the composite sheet with a cutter or the like and observing the cut surface with an optical microscope or the like. The cross-sectional area of the voids can be measured using general image analysis software.

In addition, in the composite sheet of the present invention, a thickness ratio before and after heating at 1200°C for 15 minutes (thickness after high temperature test/thickness before high temperature test) is preferably 5 times or less. When the ratio is 5 times or less, a decrease in density due to expansion is suppressed, and a decrease in strength due to a decrease in density is suppressed. From the above viewpoint, the thickness ratio before and after heating is more preferably 4 times or less, and still more preferably 3.5 times or less. On the other hand, when the thickness ratio before and after heating is 1.2 times or more, a thermally expansive layer is formed by expansion, and excellent flame shielding property is obtained. From the above viewpoint, the thickness ratio before and after heating is more preferably 1.5 times or more.

Hereinafter, each component used in the present invention and the obtained composite sheet will be described in detail.

### <Thermoplastic Resin Composition (X)>

The thermoplastic resin composition (X) used in the composite sheet of the present invention is characterized by containing (a) a thermoplastic resin and (b) a thermally expandable flame retardant.

### ((a) Thermoplastic Resin)

The thermoplastic resin contained in the thermoplastic resin composition (X) according to the present invention is not particularly limited, and examples thereof include a polyolefin resin, a polycarbonate resin, a polyester resin, an acrylonitrile styrene resin, an ABS resin, a polyamide resin, and a modified polyphenylene oxide. Among these, a polyolefin resin is preferable in the present invention. These may be used alone, or two or more kinds thereof may be used in combination. For example, the thermoplastic resin (a) may be a composite resin of two or more kinds of the above-described thermoplastic resins.

The polyolefin resin is not particularly limited, and examples thereof include the resins described below. The polyester resin is not particularly limited, and examples thereof include polybutylene terephthalate. The polyamide resin is not particularly limited, and examples thereof include nylon 66 and nylon 6.

Among them, the present invention is particularly useful in the case of containing at least a polyolefin resin as the thermoplastic resin (a). In the present invention, the term "polyolefin resin" means a resin in which the proportion of an olefin unit or a cycloolefin unit is 90 mol% or more with respect to 100 mol% of all the constitutional units constituting the resin.

The proportion of the olefin unit or the cycloolefin unit with respect to 100 mol% of all the constitutional units constituting the polyolefin resin is preferably 95 mol% or more and particularly preferably 98 mol% or more.

Examples of the polyolefin resin include α-olefin polymers such as polyethylene, polypropylene, polybutene, poly(3-methyl-1-butene), poly(3-methyl-1-pentene), and poly(4-methyl-1-pentene); α-olefin copolymers such as an ethylene-propylene block or random copolymer, an α-olefin-propylene block or random copolymer having 4 or more carbon atoms, an ethylene-methyl methacrylate copolymer, and an ethylene-vinyl acetate copolymer; and cycloolefin polymers such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemi-isotactic polypropylene, and stereoblock polypropylene. In the α-olefin-propylene block or random copolymer having 4 or more carbon atoms, examples of the α-olefin having 4 or more carbon atoms include butene, 3-methyl-1-butene, 3-methyl-1-pentene, and 4-methyl-1-pentene. These polyolefin resins may be used singly, or two or more kinds thereof may be used in combination.

Among the above-mentioned olefin resins, a polypropylene resin (hereinafter sometimes referred to as a "PP resin") is particularly preferred.

### (Melt Flow Rate (MFR))

The melt flow rate (hereinafter, sometimes abbreviated as MFR) (230°C, 2.16 kg load) of the thermoplastic resin (a) used in the present invention is preferably 40 to 500 g/10 min. When the MFR is 40 g/10 min or more, for example, when a molded body is obtained by stamping molding, defects do not occur, and the processability does not decrease. On the other hand, when the MFR is 500 g/10 min or less, burrs are not generated in the production of the composite sheet. From the above viewpoints, the MFR is preferably 50 to 400 g/10 min, more preferably 60 to 400 g/10 min, and more preferably 70 to 300 g/10 min.

The MFR of the thermoplastic resin (a) can be adjusted, for example, by controlling the hydrogen concentration or the like during polymerization.

The MFR is a value measured in accordance with JIS K 7210.

### (Content of (a) Thermoplastic Resin)

The content of the thermoplastic resin (a) in the composite sheet of the present invention is not particularly limited, and is preferably 15% to 80% by mass in the thermoplastic resin composition (X). When the content of the thermoplastic resin (a) is 15% by mass or more, the molding processability becomes particularly good, and the composite sheet is easily molded. On the other hand, when the content is 80% by mass or less, the flame retardant, the dispersant, and the inorganic fibers can be contained in sufficient amounts, and good flame shielding property can be obtained. From the above viewpoints, the content of the thermoplastic resin (a) in the thermoplastic resin composition (X) is preferably 35% to 70% by mass, and more preferably 40% to 60% by mass.

### <(a-1) Polypropylene-Based Resin>

As the thermoplastic resin (a) used in the composite sheet of the present invention, it is preferable to contain a polypropylene-based resin. Examples of the polypropylene-based resin include propylene homopolymers and propylene-α-olefin copolymers. Here, the propylene-α-olefin copolymer may be either a random copolymer or a block copolymer.

### (a-Olefin)

Examples of the α-olefin constituting the copolymer include ethylene, 1-butene, 2-methyl-1-propene, 1-pentene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, and 1-octene. These may be copolymerized with propylene using one kind thereof, or may be copolymerized with propylene using two or more kinds thereof. Among these, from the viewpoint of improving impact resistance strength of the composite sheet, ethylene or 1-butene having a large effect is preferable, and ethylene is most preferable.

### (Propylene-Ethylene Random Copolymer)

In the case of a random copolymer of propylene and ethylene, the content of the propylene unit is preferably 90% to 99.5% by mass, and more preferably 92% to 99% by mass, and the content of the ethylene unit is preferably 0.5% to 10% by mass, and more preferably 1% to 8% by mass. When the ethylene unit is equal to or more than the above lower limit value, sufficient impact resistance strength of the composite sheet will be obtained, and when it is equal to or less than the above upper limit value, sufficient rigidity will be maintained.

The contents of the propylene unit and the ethylene unit in the random copolymer of propylene and ethylene can be adjusted by controlling the composition ratio of propylene and ethylene at the time of polymerization of the random copolymer of propylene and ethylene.

In addition, the propylene content of the random copolymer of propylene and ethylene is a value measured using a cross-fractionation apparatus, FT-IR, or the like, and for the measurement conditions and the like, for example, a method described in JP 2008-189893 A may be used.

### (Melt Flow Rate (MFR))

The MFR (230°C, 2.16 kg load) of the polypropylene-based resin (a-1) used in the present invention is preferably 40 to 500 g/10 min. When the MFR is 40 g/10 min or more, defects do not occur at the time of obtaining a molded body by stamping molding or the like, and processability does not deteriorate. On the other hand, when the MFR is 500 g/10 min or less, burrs are not generated in the production of the composite sheet. From the above viewpoints, the MFR is preferably 50 to 400 g/10 min, more preferably 60 to 400 g/10 min, and still more preferably 70 to 300 g/10 min.

The MFR of the polypropylene-based resin (a-1) (propylene homopolymer) can be adjusted by controlling the hydrogen concentration or the like during polymerization.

The MFR is a value measured in accordance with JIS K 7210.

### (Content of (a-1) Polypropylene-Based Resin)

The content of the polypropylene-based resin (a-1) in the composite sheet of the present invention is not particularly limited, but is preferably 15% to 80% by mass. When the content of the polypropylene-based resin is 15% by mass or more, the molding processability becomes sufficient, and the composite sheet is easily molded. On the other hand, when the content is 80% by mass or less, the flame retardant, the dispersant, and the inorganic fibers can be contained in sufficient amounts, and sufficient flame shielding property can be obtained. From the above viewpoints, the content of the polypropylene-based resin in the composite sheet is more preferably 35% to 70% by mass, and still more preferably 40% to 60% by mass.

### <Modified Polyolefin-Based Resin>

The composite sheet of the present invention can further contain a modified polyolefin-based resin in addition to the polypropylene-based resin. Specific examples of the modified polyolefin-based resin include an acid-modified polyolefin-based resin and a hydroxy-modified polyolefin-based resin, and these resins can be used alone or in combination.

The types of the acid-modified polyolefin-based resin and the hydroxy-modified polyolefin-based resin used as the modified polyolefin-based resin are not particularly limited, and may be conventionally known ones.

### (Acid-Modified Polyolefin-Based Resin)

Examples of the acid-modified polyolefin-based resin include those obtained by graftcopolymerizing a polyolefin such as polyethylene, polypropylene, an ethylene-α-olefin copolymer, an ethylene-α-olefin-non-conjugated diene compound copolymer (EPDM or the like), or an ethylene-aromatic monovinyl compound-conjugated diene compound copolymerized elastomer with an unsaturated carboxylic acid such as maleic acid or maleic anhydride to chemically modify the polyolefin.

This graft copolymerization is carried out, for example, by reacting the above polyolefin with an unsaturated carboxylic acid in an appropriate solvent using a radical generator such as benzoyl peroxide. The component of an unsaturated carboxylic acid or a derivative thereof can also be introduced into the polymer chain by random or block copolymerization with a monomer for polyolefin.

Examples of the unsaturated carboxylic acid used for the modification include compounds having a polymerizable double bond into which a carboxy group such as maleic acid, fumaric acid, itaconic acid, acrylic acid, and methacrylic acid and, if necessary, a functional group such as a hydroxy group and an amino group are introduced.

Examples of the derivative of the unsaturated carboxylic acid include acid anhydrides, esters, amides, imides, and metal salts thereof, and specific examples thereof include maleic anhydride, itaconic anhydride, methyl acrylate, ethyl acrylate, butyl acrylate, and methyl methacrylate. Among these, maleic anhydride is preferable.

Preferred examples of the acid-modified polyolefin-based resin include a resin modified by graft-polymerizing maleic anhydride to an olefin-based polymer having ethylene and/or propylene as a main polymer constituent unit, and a resin modified by copolymerizing an olefin having ethylene and/or propylene as a main component with maleic anhydride. Specific examples thereof include a combination of polyethylene/maleic anhydride-grafted ethylene-butene-1 copolymer and a combination of polypropylene/maleic anhydride-grafted polypropylene.

### (Hydroxy-Modified Polyolefin-Based Resin)

The hydroxy-modified polyolefin-based resin is a modified polyolefin-based resin containing a hydroxy group. The hydroxy-modified polyolefin-based resin may have a hydroxy group at an appropriate site, for example, at the end of the main chain or in a side chain.

Examples of the olefin-based resin constituting the hydroxy-modified polyolefin-based resin include a homopolymer or a copolymer of an α-olefin such as ethylene, propylene, butene, 4-methylpentene-1, hexene, octene, nonene, decene, and dodecene, and a copolymer of the α-olefin and a copolymerizable monomer.

Preferable examples of the hydroxy-modified polyolefin-based resin include hydroxy-modified polyethylene-based resins such as low density, medium density, or high-density polyethylene, linear low-density polyethylene, ultra high molecular weight polyethylene, ethylene-(meth)acrylic acid ester copolymer, and ethylene-vinyl acetate copolymer; and hydroxy-modified polypropylene-based resins such as polypropylene homopolymer such as isotactic polypropylene, random copolymer of propylene and an α-olefin (for example, ethylene, butene, hexane), a propylene-α-olefin block copolymer, and hydroxy-modified poly(4-methylpentene-1).

### <(b) Thermally Expandable Flame Retardant>

The thermoplastic resin composition (X) forming the composite sheet of the present invention contains (b) a thermally expandable flame retardant. The thermally expandable flame retardant (b) is a flame retardant that suppresses combustion of a material by forming a surface expansion layer (intumescent) that prevents radiant heat from a combustion source and diffusion of combustion gas, smoke, and the like from a combustion object to the outside.

Among the thermally expandable flame retardants, a phosphorus-based flame retardant is preferable, and examples thereof include a salt of (poly)phosphoric acid and a nitrogen compound (hereinafter, also referred to as a "compound (b1)"). Specific examples thereof include ammonium salts and amine salts of (poly)phosphoric acid such as ammonium polyphosphate, melamine polyphosphate, piperazine polyphosphate, ammonium pyrophosphate, melamine pyrophosphate, and piperazine pyrophosphate.

Examples of the nitrogen compound include ammonia, melamine, piperazine, and other nitrogen compounds, and examples of the other nitrogen compound include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

### <Other Flame Retardant>

As described above, the composite sheet of the present invention is characterized by containing a thermally expandable flame retardant, but other flame retardants may be used in combination with the thermally expandable flame retardant. The other flame retardant is not particularly limited, and a conventionally used flame retardant can be used.

Specific examples thereof include a phosphorus-based flame retardant other than the thermally expandable flame retardant, a bromine-based flame retardant, and an antimony-based flame retardant. Among them, a phosphorus-based flame retardant is preferable from the viewpoint of improving flame shielding property.

### (Phosphorus-Based Flame Retardant)

The phosphorus-based flame retardant is a phosphorus compound, that is, a compound containing a phosphorus atom in the molecule. The phosphorus-based flame retardant exhibits a flame retardant effect by forming char during combustion of the composite sheet.

The phosphorus-based flame retardant may be a known one, and examples thereof include (poly)phosphates and (poly)phosphoric acid esters. Here, "(poly)phosphate" indicates a phosphate or a polyphosphate, and "(poly)phosphoric acid ester" indicates a phosphoric acid ester or a polyphosphoric acid ester.

The phosphorus-based flame retardant is preferably solid at 80°C.

As the phosphorus-based flame retardant, a (poly)phosphate is preferable in terms of flame retardancy.

Examples of the (poly)phosphate include ammonium polyphosphate salt, melamine polyphosphate salt, piperazine polyphosphate salt, piperazine orthophosphate salt, melamine pyrophosphate salt, piperazine pyrophosphate salt, melamine polyphosphate salt, and melamine orthophosphate salt, and examples of other phosphorus-based flame retardants include calcium phosphate and magnesium phosphate.

In the above examples, compounds obtained by replacing melamine or piperazine with other nitrogen compounds can also be used in the same manner. These (poly)phosphates may be used singly, or two or more kinds thereof may be used in combination.

Examples of a commercially available product of the phosphorus-based flame retardant include ADK STAB FP-2100J, FP-2200, and FP-2500S (manufactured by ADEKA Corporation).

### (Bromine-Based Flame Retardant)

Examples of the bromine-based flame retardant include decabromodiphenyl ether, tetrabromobisphenol A, tetrabromobisphenol S, 1,2-bis(2',3',4',5',6'-pentabromophenyl)ethane, 1,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylenebistetrabromophthalimide, hexabromocyclododecane, hexabromobenzene, pentabromobenzyl acrylate, 2,2-bis[4'(2",3"-dibromopropoxy)-3',5'-dibromophenyl]-propane, bis[3,5-dibromo-4-(2,3-dibromopropoxy)phenyl]sulfone, and tris(2,3-dibromopropyl) isocyanurate.

### (Antimony-Based Flame Retardant)

Examples of the antimony-based flame retardant include antimony trioxide, antimony tetroxide, antimony pentoxide, sodium pyroantimonate, antimony trichloride, antimony trisulfide, antimony oxychloride, antimony dichloride perchloropentane, and potassium antimonate, and antimony trioxide and antimony pentoxide are particularly preferable.

Among the above-mentioned flame retardants, a phosphorus-based flame retardant is preferable from the viewpoint of having excellent flame retardancy without biopersistence, and a non-halogen-based flame retardant is preferable from the viewpoint of environmental friendliness.

The above-mentioned flame retardants may be used singly, or two or more kinds thereof may be used in combination.

### (Content of (b) Thermally Expandable Flame Retardant)

The content of the thermally expandable flame retardant in the composite sheet of the present invention is not particularly limited, and is preferably in a range of 1% to 30% by mass. When the content is 1% by mass or more, good flame retardancy can be imparted to the composite sheet, and good flame shielding property can be obtained. On the other hand, when the content of the flame retardant is 30% by mass or less, the thermoplastic resin can be contained at a sufficient content ratio, so that the molding processability becomes better. From the above viewpoints, the content of the thermally expandable flame retardant in the composite sheet is more preferably in a range of 1% to 25% by mass, and still more preferably in a range of 3% to 20% by mass.

### <(c) Dispersant>

The thermoplastic resin composition (X) according to the present invention preferably further contains a dispersant.

The dispersant (c) is not particularly limited as long as it can disperse the thermally expandable flame retardant (b) in the thermoplastic resin (a), and a polymer dispersant can be suitably used in terms of compatibility with the thermoplastic resin (a). Preferably, a dispersant capable of dispersing the thermally expandable flame retardant (b) in the polypropylene-based resin (a-1) can be used. As the polymer dispersant, a polymer dispersant having a functional group is preferable, and from the viewpoint of dispersion stability, a polymer dispersant having a functional group such as a carboxy group, a phosphoric acid group, a sulfonic acid group, a primary, secondary, or tertiary amino group, a quaternary ammonium salt group, or a group derived from a nitrogen-containing hetero ring such as pyridine, pyrimidine, or pyrazine is preferable.

In the present invention, a polymer dispersant having a carboxy group is preferable, and in particular, when a phosphorus-based flame retardant suitable as a flame retardant is used, a copolymer of an α-olefin and an unsaturated carboxylic acid is preferable. By using the dispersant, the dispersibility of the phosphorus-based thermally expandable flame retardant can be improved, and the content of the thermally expandable flame retardant can be reduced.

### (Copolymer of α-Olefin and Unsaturated Carboxylic Acid)

Regarding the α-olefin unit and the unsaturated carboxylic acid unit in the "copolymer of an α-olefin and an unsaturated carboxylic acid" (hereinafter referred to as "copolymer (c1)") according to the present invention, the proportion of the α-olefin unit with respect to the total 100 mol% thereof is preferably 20 mol% or more and 80 mol% or less.

In the copolymer (c1), the proportion of the α-olefin unit with respect to the total amount of the α-olefin unit and the unsaturated carboxylic acid unit is more preferably 30 mol% or more and more preferably 70 mol% or less. When the proportion of the α-olefin is equal to or more than the above lower limit value, the compatibility with the polyolefin-based resin will be more excellent, and when it is equal to or less than the above upper limit value, the compatibility with the thermally expandable flame retardant (b) will be more excellent.

In the copolymer (c1), as the α-olefin, an α-olefin having 5 or more carbon atoms is preferable, and an α-olefin having 10 or more and 80 or less carbon atoms is more preferable. When the α-olefin has 5 or more carbon atoms, the compatibility with the thermoplastic resin (a) tends to be better, and when the α-olefin has 80 or less carbon atoms, it is advantageous in terms of raw material cost. From the above viewpoints, the number of carbon atoms of the α-olefin is more preferably 12 or more and 70 or less, and particularly preferably 18 or more and 60 or less.

In the copolymer (c1), examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norbornane-5-ene-2,3-dicarboxylic acid, and esters, anhydrides, and imides of these unsaturated carboxylic acids. The term "(meth)acrylic acid" refers to acrylic acid or methacrylic acid.

Specific examples of the ester, anhydride, or imide of the unsaturated carboxylic acid include (meth)acrylic acid esters such as methyl (meth)acrylate, ethyl (meth)acrylate, butyl (meth)acrylate, 2-ethylhexyl (meth)acrylate, and glycidyl (meth)acrylate; dicarboxylic acid anhydrides such as maleic anhydride, itaconic anhydride, citraconic anhydride, and 5-norbornene-2,3-dicarboxylic acid anhydride; and maleimide compounds such as maleimide, N-ethylmaleimide, and N-phenylmaleimide. One kind of these may be used singly, or two or more kinds thereof may be used in combination.

Among the above, esters and dicarboxylic acid anhydrides are preferable from the viewpoint of copolymerization reactivity. Among them, dicarboxylic acid anhydrides are preferable, and maleic anhydride is particularly preferable, from the viewpoint of compatibility with a thermally expandable phosphorus-based flame retardant suitable as a flame retardant.

The weight-average molecular weight of the copolymer (c1) is preferably 2,000 or more, and more preferably 3,000 or more, and is preferably 50,000 or less, and more preferably 30,000 or less. When the weight-average molecular weight of the copolymer (c1) is within the above range, the dispersibility of the flame retardant (b) is more excellent.

The weight-average molecular weight of the copolymers (c1) is a value in terms of standard polystyrene measured by dissolving the copolymer (c1) in tetrahydrofuran (THF) and performing gel permeation chromatography.

Examples of a commercially available product of the copolymer (c1) include Licolub CE2 (manufactured by Clariant (Japan) K.K.) and DIACARNA 30M (manufactured by Mitsubishi Chemical Corporation).

The content of the dispersant (c) with respect to 100 parts by mass of the thermally expandable flame retardant (b) in the composite sheet of the present invention is in a range of more than 0 and 25 parts by mass or less, and preferably in a range of 0.01 to 10 parts by mass.

According to the investigation of the present inventors, when a thermally expandable flame retardant is uniformly dispersed and present in the inorganic fibers constituting the composite sheet using a thermoplastic resin as a matrix resin, the flame shielding property of the composite sheet can be significantly improved. Although the detailed mechanism is unknown, the present inventors speculate as follows. That is, when the thermally expandable flame retardant is uniformly dispersed in the resin between the inorganic fibers, the char formed by the thermally expandable flame retardant being in contact with the flame is fixed in the gaps between the inorganic fibers. Furthermore, the gaps between the inorganic fibers limit the size of the char formed by the expansion during the contact with the flame, so that the size of the char formed is uniform. It is considered that the combination of the char fixing effect of the inorganic fibers and the uniformity of the size of the char forms a dense char and significantly improves the flame shielding property of the composite sheet. Based on these findings, the present inventors have found that by setting the ratio of the content of the dispersant to the content of the thermally expandable flame retardant to a specific range, the thermally expandable flame retardant can be controlled to be uniformly present in the resin between the inorganic fibers, and the flame shielding property of the composite sheet can be significantly improved.

For the above reasons, when the content of the dispersant (c) is more than 0, the dispersibility of the flame retardant becomes sufficient, and sufficient flame shielding property can be imparted to the composite sheet. On the other hand, when the content is 25 parts by mass or less, the physical properties of the composite sheet become sufficient. From the same viewpoint, the content of the dispersant (c) is preferably 0.01 parts by mass or more, more preferably 0.1 parts by mass or more, still more preferably 1 part by mass or more, and particularly preferably 2 parts by mass or more. On the other hand, the upper limit value is more preferably 20 parts by mass or less, still more preferably 15 parts by mass or less, yet still more preferably 10 parts by mass or less, even more preferably 5 parts by mass or less, and particularly preferably 3 parts by mass or less.

The proportion of the dispersant (c) with respect to 100 parts by mass of the total of the thermoplastic resin (a) and the thermally expandable flame retardant (b) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, still more preferably 2.0 parts by mass or less, yet still more preferably 1.5 parts by mass or less, and even more preferably 1.0 parts by mass or less. When the proportion of the dispersant (c) is equal to or more than the lower limit value, the thermally expandable flame retardant (b) is more favorably dispersed, and the flame shielding property, physical properties, and appearance of the obtained composite sheet are more favorable. When the proportion of the dispersant (c) is equal to or less than the upper limit value, the influence of the dispersant (c) on the flame shielding property of the composite sheet can be further suppressed. In particular, the proportion of the dispersant (c) with respect to 100 parts by mass of the total of the polyolefin-based resin and the thermally expandable flame retardant (b) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, still more preferably 2.0 parts by mass or less, yet still more preferably 1.5 parts by mass or less, and even more preferably 1.0 parts by mass or less.

In addition, with respect to the inorganic fibers (Y) described in detail below, the proportion of the dispersant (c) with respect to 100 parts by mass of the inorganic fibers (Y) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, and still more preferably 2.0 parts by mass or less. When the proportion of the dispersant (c) is equal to or more than the lower limit value, the flame shielding property, physical properties, and appearance of the obtained composite sheet are more favorable. When the proportion of the dispersant (c) is equal to or less than the upper limit value, the influence of the dispersant (c) on the flame shielding property of the composite sheet can be further suppressed.

### <(Y) Inorganic Fiber>

The composite sheet of the present invention contains (Y) inorganic fibers. As the inorganic fibers (Y), various fibers can be used, and examples thereof include metal oxide fibers such as a glass fiber, rock wool, an alumina fiber, and a silica alumina fiber, ceramic fibers such as a potassium titanate fiber, a calcium silicate (wollastonite) fiber, and a ceramic fiber, carbon fibers, and metal fibers. These inorganic fibers may be used alone or in combination of two or more kinds thereof.

Among the inorganic fibers, at least one kind selected from a glass fiber and an alumina fiber is preferable from the viewpoint of flame shielding property and processability.

The inorganic fibers (Y) can include two or more kinds of inorganic fibers having different melting temperatures. As the combination of two or more kinds of inorganic fibers having different melting temperatures, it is preferable that at least one kind is a glass fiber and the other one or more kinds are a combination of one or more kinds of inorganic fibers selected from the group consisting of an alumina fiber, a silica fiber, an alkaline earth silicate fiber (biosoluble), and a carbon fiber. By including two or more kinds of inorganic fibers having different melting temperatures, it is possible to effectively prevent deterioration of the function of the flame shielding property.

In addition, the inorganic fiber used in the present invention may be used in combination with a sizing agent or a surface treatment agent. Examples of the sizing agent or the surface treatment agent include compounds having a functional group such as an epoxybased compound, a silane-based compound, and a titanate-based compound.

The average fiber diameter of the inorganic fibers is preferably 3 to 25 µm. In addition, the average fiber length is preferably 0.1 mm or more, more preferably 1 mm or more, and still more preferably 5 mm or more.

Since the preferred ranges of the average fiber diameter and the average fiber length vary depending on the type of the inorganic material constituting the inorganic fibers, specific preferred ranges thereof will be described later.

The fiber diameter can be measured using a scanning electron microscope or the like, and the average fiber diameter can be obtained by, for example, measuring the fiber diameters of 10 fibers at random and calculating the average value. The fiber length can be measured using a ruler, calipers, or the like from an image enlarged by a microscope or the like as necessary, and the average fiber length can be obtained by, for example, measuring the fiber lengths of 10 fibers at random and calculating the average value.

The content of the inorganic fibers in the composite sheet of the present invention is preferably 1% to 80% by mass. When the content of the inorganic fibers is 1% by mass or more, the strength, rigidity, and impact resistance of the composite sheet become favorable. On the other hand, when the content is 80% by mass or less, the composite sheet can be easily produced and processed. In addition, when the content of the inorganic fibers is 80% by mass or less, the specific gravity of the composite sheet is reduced, and the weight reduction effect as a substitute for metal becomes remarkable.

From the above viewpoints, the content of the inorganic fibers (Y) in the composite sheet is more preferably 3% to 60% by mass, still more preferably 10% to 50% by mass, and particularly preferably 30% to 45% by mass.

### (Glass Fiber)

One of the inorganic fibers (Y) suitable for the composite sheet of the present invention includes glass fibers. The glass fibers may be, for example, long fibers having an average fiber length of 30 mm or more, or may be fibers (chopped strands) having a short average fiber length, but from the viewpoints of flame shielding property, rigidity, impact resistance, and the like, it is preferable to use glass fibers having a long average fiber length.

More specifically, the average fiber length is preferably 5 mm or more. In a case where the average fiber length is 5 mm or more, the strength and the impact resistance of the composite sheet become satisfactory. From the above viewpoints, the average fiber length of the glass fibers is preferably 5 mm or more, and more preferably 30 mm or more.

In addition, the upper limit of the average fiber length of the glass fibers is not particularly limited, and for example, in a case where a pellet produced by a pultrusion method using the glass fibers is used, the length of the pellet is the fiber length of the glass fibers, and thus the upper limit of the average fiber length of the glass fibers is about 20 mm at the maximum. In the swirl mat system using long glass fibers, the length of the glass fibers in the roving used for production is the maximum fiber length, which is about 17,000 m (17 km), but when cut according to the size of the composite sheet, the cut length is the maximum fiber length.

In addition, the average fiber diameter of the glass fibers is preferably in a range of 9 to 25 µm. When the average fiber diameter is 9 µm or more, the rigidity and the impact resistance of the composite sheet become sufficient, and on the other hand, when the average fiber diameter is 25 µm or less, the strength of the composite sheet becomes satisfactory. From the above viewpoints, the average fiber diameter of the glass fibers is more preferably in a range of 10 to 15 µm.

The average fiber diameter and the average fiber length of the glass fibers can be measured by the above-described method.

The material of the glass fibers used in the present invention is not particularly limited, and may be any of alkali-free glass, low-alkali glass, and alkali-containing glass, and those having various compositions conventionally used as glass fibers can be used.

### (Alumina Fiber)

One of the inorganic fibers (Y) suitable for the composite sheet of the present invention includes alumina fibers. The alumina fibers are usually fibers composed of alumina and silica, and in the composite sheet of the present invention, the alumina/silica composition ratio (mass ratio) of the alumina fibers is preferably in a range called a mullite composition or high alumina composition of 65/35 to 98/2, more preferably 70/30 to 95/5, and particularly preferably 70/30 to 74/26.

The average fiber diameter of the alumina fibers is preferably in a range of 3 to 25 µm, and it is preferable that the alumina fibers do not substantially contain fibers having a fiber diameter of 3 µm or less. Here, the expression "does not substantially contain fibers having a fiber diameter of 3 µm or less" means that the content of fibers having a fiber diameter of 3 µm or less is 0.1% by mass or less of the total mass of the inorganic fibers.

In addition, the average fiber diameter of the alumina fibers is more preferably 5 to 8 µm. When the average fiber diameter of the inorganic fibers is too large, the resilience and toughness of the mat-like inorganic fiber aggregate layer decrease, and conversely, when the average fiber diameter is too small, the amount of dust floating in the air increases, and the probability that inorganic fibers having a fiber diameter of 3 µm or less are contained increases.

The alumina fibers are fibers having an average fiber length of preferably 5 mm or more, more preferably 30 mm or more, and still more preferably 50 mm or more, and also preferably 3.0 × 10³ mm or less, and more preferably 1.0 × 10³ mm or less. When the average fiber length and the average fiber diameter of the alumina fibers are within these ranges, the strength and the impact resistance of the composite sheet become satisfactory.

### (Carbon Fiber)

The preferred range of the carbon fibers is also equivalent to that of the glass fibers.

### <Optional Additional Components>

In the composite sheet of the present invention, in addition to the above-described components, optional additional components can be blended for the purpose of imparting other effects, such as further improving the effects of the present invention, to the extent that the effects of the present invention are not significantly impaired.

Specific examples thereof include colorants such as pigments, light stabilizers such as hindered amine-based light stabilizers, ultraviolet absorbers such as benzotriazole-based ultraviolet absorbers, nucleating agents such as sorbitol-based nucleating agents, antioxidants such as phenol-based and phosphorus-based antioxidants, antistatic agents such as nonionic surfactants, neutralizing agents such as inorganic compounds, antibacterial and antifungal agents such as thiazole-based antibacterial and antifungal agents, flame retardants and flame retardant aids such as halogen compounds and lignophenols, plasticizers, dispersants such as organic metal salt-based dispersants, lubricants such as fatty acid amide-based lubricants, metal deactivators such as nitrogen compounds, polyolefin resins other than the polypropylene-based resins, thermoplastic resins such as polyamide resins and polyester resins, and elastomers (rubber components) such as olefin-based elastomers and styrene-based elastomers.

Two or more kinds of these optional additional components may be used in combination.

As the colorant, for example, inorganic or organic pigments are effective for imparting or improving the colored appearance, appearance, texture, commercial value, weather resistance, durability, and the like of the composite sheet of the present invention.

Specific examples of the inorganic pigments include carbon blacks such as furnace carbon and ketjen carbon, titanium oxide, iron oxides (red iron oxide and the like), chromic acid (yellow lead and the like), molybdic acid, selenium sulfide, and ferrocyanides, and specific examples of the organic pigments include azo-based pigments including hardly soluble azo lakes, soluble azo lakes, insoluble azo chelates, condensable azo chelates, and other azo chelates, phthalocyanine-based pigments such as phthalocyanine blue and phthalocyanine green, threnebased pigments such as anthraquinone, perinone, perylene, and thioindigo, dye lakes, quinacridone-based pigments, dioxazine-based pigments and isoindolinone-based pigments. In order to obtain a metallic tone or a pearl tone, aluminum flakes and a pearl pigment can be contained. In addition, a dye can also be contained.

As light stabilizers and ultraviolet absorbers, for example, hindered amine compounds, benzotriazole-based compounds, benzophenone-based compounds, salicylate-based compounds, and the like are effective for imparting and improving weather resistance, durability, and the like of the composite sheet of the present invention, and are effective for further improving weather-resistance discoloration property.

Specific examples of the hindered amine compounds include a condensate of dimethyl succinate and 1-(2-hydroxyethyl)-4-hydroxy-2,2,6,6-tetramethylpiperidine; poly[6-(1,1,3,3-tetramethylbutyl)imino-1,3,5-triazine-2,4-diyl][(2,2,6,6-tetramethyl-4-piperidyl)imino]-hexamethylene-[(2,2,6,6-tetramethyl-4-piperidyl)imino]]; tetrakis(2,2,6,6-tetramethyl-4-piperidyl)1,2,3,4-butane tetracarboxylate; tetrakis(1,2,2,6,6-pentamethyl-4-piperidyl)1,2,3,4-butanetetracarboxylate; bis(1,2,2,6,6-pentamethyl-4-piperidyl)sebacate; and bis-2,2,6,6-tetramethyl-4-piperidyl sebacate. Specific examples of the benzotriazole-based compounds include 2-(2'-hydroxy-3',5'-di-t-butylphenyl)-5-chlorobenzotriazole; and 2-(2'-hydroxy-3'-t-butyl-5'-methylphenyl)-5-chlorobenzotriazole. Specific examples of the benzophenone-based compounds include 2-hydroxy-4-methoxybenzophenone; and 2-hydroxy-4-n-octoxybenzophenone. Specific examples of the salicylate-based compounds include 4-t-butylphenyl salicylate; and 2,4-di-t-butylphenyl 3',5'-di-t-butyl-4'-hydroxybenzoate.

Here, the method of using the light stabilizer and the ultraviolet absorber in combination is preferable because the effect of improving weather resistance, durability, weather-resistance discoloration property, and the like is large.

As the antioxidant, for example, a phenol-based, phosphorus-based, or sulfur-based antioxidant is effective for imparting and improving heat resistance stability, processing stability, heat aging resistance, and the like of the composite sheet of the present invention.

In addition, as the antistatic agent, for example, a nonionic or cationic antistatic agent is effective for imparting and improving antistatic property of the composite sheet of the present invention.

Examples of the olefin-based elastomer include ethylene-α-olefin copolymer elastomers such as an ethylene-propylene copolymer elastomer (EPR), an ethylene-butene copolymer elastomer (EBR), an ethylene-hexene copolymer elastomer (EHR), and an ethylene-octene copolymer elastomer (EOR); ethylene-α-olefin-diene terpolymer elastomers such as an ethylene-propylene-ethylidenenorbornene copolymer, an ethylene-propylene-butadiene copolymer, and an ethylene-propylene-isoprene copolymer; and a styrene-butadiene-styrene triblock copolymer elastomer (SBS).

Examples of the styrene-based elastomer include styrene-based elastomers such as a styrene-isoprene-styrene triblock copolymer elastomer (SIS), a styrene-ethylene-butylene copolymer elastomer (SEB), a styrene-ethylene-propylene copolymer elastomer (SEP), a styrene-ethylene-butylene-styrene copolymer elastomer (SEBS), a styrene-ethylene-butylene-ethylene copolymer elastomer (SEBC), a hydrogenated styrene-butadiene elastomer (HSBR), a styrene-ethylene-propylene-styrene copolymer elastomer (SEPS), a styrene-ethylene-ethylene-propylene-styrene copolymer elastomer (SEEPS), a styrene-butadiene-butylene-styrene copolymer elastomer (SBBS), a partially hydrogenated styrene-isoprene-styrene copolymer elastomer, and a partially hydrogenated styrene-isoprene-butadiene-styrene copolymer elastomer, and hydrogenated polymer-based elastomers such as an ethylene-ethylene-butylene-ethylene copolymer elastomer (CEBC).

Among them, it is preferable to use an ethylene-octene copolymer elastomer (EOR) and/or an ethylene-butene copolymer elastomer (EBR) from the viewpoint that appropriate flexibility or the like is easily imparted and impact resistance tends to be excellent in the polypropylene-based resin composition and the composite sheet of the present invention.

### <Method for Producing Thermoplastic Resin Composition (X)>

The thermoplastic resin composition (X) according to the present invention contains (a) a thermoplastic resin, a modified polyolefin-based resin added as necessary, (b) a thermally expandable flame retardant, and (c) a dispersant, as described above. In addition, an optional additional component may be further blended. In the thermoplastic resin composition (X), when the thermoplastic resin (a) is the polypropylene-based resin (a-1), the thermoplastic resin composition (X) may be particularly referred to as a polypropylene-based resin composition (hereinafter, may be described as a "PP composition").

As a method for producing the thermoplastic resin composition (X) or the PP composition, a conventionally known method can be used, and the thermoplastic resin composition (X) or the PP composition can be produced by blending, mixing, and melt-kneading the above components.

The mixing is performed by using a mixer such as a tumbler, a V-blender, a ribbon blender, and the melt-kneading is performed by using an apparatus such as a single-screw extruder, a twin-screw extruder, a Banbury mixer, a roll mixer, a Brabender plastograph, a kneader, and the mixture is melt-kneaded and granulated.

### <Method for Producing Composite Sheet>

With respect to the composite sheet of the present invention, the production method thereof is not particularly limited, and the composite sheet is preferably produced by impregnating a mat made of inorganic fibers (Y) (hereinafter sometimes referred to as "inorganic fiber mat") with the thermoplastic resin composition (X) or the PP composition. That is, one aspect of the composite sheet is obtained by impregnating a mat made of the inorganic fibers (Y) with the thermoplastic resin composition (X).

Examples of the impregnation method include a method of applying the thermoplastic resin composition (X) or the PP composition to the inorganic fiber mat (Y), a method of preparing a sheet of the thermoplastic resin composition (X) or the PP composition (hereinafter, sometimes referred to as "thermoplastic resin sheet" or "PP sheet"), laminating the thermoplastic resin sheet or the PP sheet on the inorganic fiber mat (Y), and heating and melting the thermoplastic resin sheet or the PP sheet to impregnate the inorganic fiber mat (Y).

In the present invention, from the viewpoint of the impregnation property of the resin of the composite sheet into the fibers, a method of laminating the thermoplastic resin sheet or the PP sheet on the inorganic fiber mat (Y) and heating and melting the thermoplastic resin sheet or the PP sheet is preferred. In particular, a laminate can be obtained by laminating the inorganic fiber mat between two thermoplastic resin sheets or PP sheets, then heating and pressurizing the laminate, and then cooling and solidifying the laminate.

Here, the thickness of the thermoplastic resin sheet or the PP sheet is not particularly limited as long as it is within a range in which the fiber mat can be impregnated well.

As described above, it is important that the composite sheet in the present invention has a density of 1.3 g/cm³ or less, and the composite sheet can be obtained by expanding the resin-impregnated sheet by heating or the like to reduce the density.

### (Inorganic Fiber Mat)

The form of the inorganic fibers used in the method for producing the composite sheet is not particularly limited, and those having various forms can be used, and those formed into a mat shape or a sheet shape are preferable.

More specifically, a mat formed of glass fibers (hereinafter referred to as "glass fiber mat") and a mat formed of metal oxide fibers represented by alumina fibers (hereinafter referred to as "metal oxide mat") are preferable.

The basis weight (mass per unit area) of the inorganic fiber mat is not particularly limited and is appropriately determined depending on the application, but is preferably 300 g/m² or more, more preferably more than 800 g/m², and more preferably more than 1500 g/m². In addition, the basis weight of the inorganic fiber mat is not particularly limited, and is preferably 5000 g/m² or less, more preferably 4500 g/m² or less, still more preferably 4000 g/m² or less, and particularly preferably 3500 g/m² or less.

The thickness of the inorganic fiber mat according to the present invention is not particularly limited, and is preferably 4 mm or more, more preferably 5 mm or more, and still more preferably 6 mm or more. On the other hand, the thickness of the fiber mat is preferably 40 mm or less, more preferably 35 mm or less, and still more preferably 30 mm or less.

The basis weight (basis weight) per unit area of the inorganic fiber mat can be adjusted to the above range by adjusting the amount of fibers per unit area when the inorganic fiber aggregate constituting the inorganic fiber mat is laminated by a folding device. In addition, the inorganic fiber mat of the present invention may have a configuration in which a plurality of inorganic fiber mats are adhered or may have a single configuration, but it is preferable that the inorganic fiber mat has a single configuration in view of handleability and peeling strength at the bonding interface.

### (Glass Fiber Mat)

Examples of the form of the glass fiber mat used in the present invention include felt and blanket processed from short fiber glass cotton, chopped strand mat processed from continuous glass fibers, swirl (swirl-like) mat of continuous glass fibers, and unidirectionally aligned mat. Among these, it is preferable to use a glass fiber mat obtained by needle-punching a swirl (swirl-like) mat of continuous glass fibers because the strength and impact resistance of the composite sheet are excellent.

### (Metal Oxide Fiber Mat)

The metal oxide fiber mat according to the present invention is a mat composed of metal oxide fibers such as alumina fibers and subjected to a needling treatment.

In the method of laminating the thermoplastic resin sheet or the PP sheet on the inorganic fiber mat, followed by heating and melting, the heating temperature is preferably 170 to 300°C. When the heating temperature is 170°C or higher, the fluidity of the polypropylene-based resin is sufficient, the inorganic fiber mat can be sufficiently impregnated with the PP composition, and a suitable resin-impregnated sheet can be obtained. On the other hand, when the heating temperature is 300°C or lower, the thermoplastic resin composition or the PP composition is not deteriorated.

Further, the applied pressure is preferably 0.1 to 1 MPa. When the applied pressure is 0.1 MPa or more, the inorganic fiber mat can be sufficiently impregnated with the thermoplastic resin composition or the PP composition, and a suitable resin-impregnated sheet can be obtained. On the other hand, when the applied pressure is 1 MPa or less, the thermoplastic resin composition or the PP composition flows, and burrs are not generated.

In addition, the temperature at the time of cooling is not particularly limited as long as it is equal to or lower than the freezing point of the thermoplastic resin in the thermoplastic resin composition (X) or the PP composition, and when the cooling temperature is 80°C or lower, the obtained resin-impregnated sheet is not deformed when being taken out. From the above viewpoint, the cooling temperature is preferably room temperature to 80°C.

As a method of obtaining a composite sheet by heating, pressurizing, and cooling the resin-impregnated sheet, a composite sheet is produced by a method of press molding in a mold equipped with a heating device, a lamination process of heating and pressurizing by passing through between two pairs of rollers equipped with a heating device, or the like. In particular, the lamination process is preferable because productivity is good since continuous production can be performed.

### <Thickness of Composite Sheet>

The thickness of the composite sheet of the present invention is usually 1 to 10 mm, and preferably 2 to 5 mm. In a case where the thickness of the composite sheet is 1 mm or more, the composite sheet can be easily produced. On the other hand, in a case where the thickness of the composite sheet is 10 mm or less, pre-heating for a long time is not required at the time of processing the composite sheet by stamping molding or the like, and good molding processability can be obtained.

### <Molded Body>

The molded body of the present invention is obtained by molding the above-mentioned composite sheet. The molding method is not particularly limited, and a desired shape can be obtained by subjecting the composite sheet to stamping molding according to a conventional method.

### (Application)

Examples of applications of the molded body of the present invention include various parts in the industrial field such as automobile parts and electrical and electronic equipment parts. In particular, the molded body is excellent in strength, rigidity, and conductivity, and can be suitably used for applications requiring these performances in a well-balanced manner and at a higher level, for example, various housings and casings such as a battery case.

### [Structure]

The structure formed by using the molded body of the present invention is not particularly limited, but there is an aspect in which the structure has, for example, a battery housing and a battery cell.

The structure formed by using the molded body of the present invention is preferably a battery, and the battery is not particularly limited. Examples thereof include secondary batteries such as a lithium ion battery, a nickel-hydrogen battery, a lithium-sulfur battery, a nickel-cadmium battery, a nickel-iron battery, a nickel-zinc battery, a sodium-sulfur battery, a lead storage battery, and an air battery. Among these, a lithium ion battery is preferable, and in particular, the battery housing of the present invention is suitably used for suppressing thermal runaway of a lithium ion battery.

### [Electric Mobility]

The structure formed by using the molded body of the present invention is also useful as an electric mobility.

Here, the electric mobility refers to transportation equipment such as a vehicle, a ship, or an airplane that operates using electricity as an energy source. The vehicle includes a hybrid car in addition to an electric vehicle (EV).

A structure such as a battery having a battery housing using the molded body of the present invention and a battery cell is highly safe and is very useful for electric mobility using a battery module having a high energy density in order to extend a travel distance.

### Examples

Hereinafter, the present invention will be described in detail with reference to Examples, but the present invention is not limited to these Examples.

### (Evaluation Methods)

### 1. Evaluation of Flame Shielding Property

For the composite sheet prepared in each of Examples and Comparative Examples, a flame of a burner at 1300°C was applied from one surface, and it was evaluated whether or not the flame penetrated after 15 minutes. The distance from the nozzle of the burner to the sample was 160 mm, and the flame front surface was set to 1200°C. The flame front temperature was confirmed with a thermocouple thermometer.

### 2. Evaluation of Heat Insulating Property

In the flame shielding property evaluation described in 1. above, the temperature of the surface (back surface) of the test piece opposite to the surface to which the flame of the burner was applied was measured by a non-contact type radiation thermometer ("FT-H50K" manufactured by KEYENCE CORPORATION). The measuring area is φ35 mm. The position of the center of the measuring area was visually set to be in the vicinity of a position directly above the position of the flame of the burner. Table 1 shows the maximum reached temperature (°C) of the back surface until 600 seconds have elapsed, and the elapsed time (seconds) when the back surface temperature reached 500°C for the first time.

### 3. Evaluation of Flame Retardancy

The composite sheet prepared in each of Examples and Comparative Examples was evaluated for flame retardancy based on the UL94 50W (20 mm) vertical burning test. The evaluation was made based on whether V-1 was achieved.

### 4. Expansion Ratio

The thickness of the test piece before and after the heating test of the composite sheet prepared in each Example was measured, and the expansion ratio was evaluated by the ratio of the thickness of the test piece after heating to the thickness of the test piece before heating.

### (Heating Test Conditions)

The test piece was subjected to a heating treatment at 1200°C for 15 minutes in the atmosphere.

### 5. Measurement of Void Cross-Sectional Area

The composite sheet prepared in each Example was cut with a cutting machine manufactured by DAHLE, and the cross section was observed at 30 times using a digital microscope "VHX-6000" manufactured by KEYENCE CORPORATION to obtain a cross-sectional image. The cross-sectional area of the void portion (void) was measured for the obtained cross-sectional image using an automatic area measuring tool of VHX-6000. Among them, the average value of the cross-sectional areas of voids having a cross-sectional area of 0.01 mm² or more was calculated.

### 6. Measurement of Bending Strength after Firing

The composite sheet prepared in each Example was heat-treated in a nitrogen atmosphere (oxygen-free) at 700°C for 20 minutes. A test piece of 100 mm × 50 mm was cut out from the sheet after the heat treatment, and the bending strength of this test piece was measured using AUTOGRAPH "AG-10TA" (manufactured by SHIMADZU CORPORATION) under the conditions of a test speed of 20 mm/min and a span of 100 mm.

### 7. Measurement of Thermal Conductivity after Firing

The composite sheet prepared in each Example was heat-treated in a nitrogen atmosphere (oxygen-free) at 700°C for 20 minutes. A test piece of 150 mm × 100 mm was cut out from the sheet after the heat treatment. The thermal conductivity of the sample was calculated by comparing the temperature difference between the heating surface and the heat radiation surface when the test sample was heated on one side with that of a sheet-shaped sample having a known thermal conductivity.

### (Materials Used)

### 1. Polypropylene-Based Resin (Component a)

"NOVATEC PP SA06GA" (melt flow rate: 60 g/10 min) manufactured by Japan Polypropylene Corporation was used.

### 2. Thermally Expandable Flame Retardant (Component b)

Phosphorus-based flame retardant composition (manufactured by ADEKA Corporation, ADK STAB FP-2500S, containing 50% to 60% by mass of piperazine pyrophosphate, 35% to 45% by mass of melamine pyrophosphate, and 3% to 6% by mass of zinc oxide with respect to the total mass of the phosphorus-based flame retardant composition)

### 3. Dispersant (Component c)

α-Olefin-maleic anhydride copolymer (manufactured by Mitsubishi Chemical Corporation, DIACARNA 30M, weight-average molecular weight: 7,800).

### 4. Glass Fiber Mat (Component Y)

A glass fiber mat obtained by needle-punching a swirl (swirl-like) mat (basis weight of 880 g/m²) produced from a continuous glass fiber (fiber diameter of 23 µm) of roving was used.

### 5. PET Nonwoven Fabric

PET nonwoven fabric ("VOLANS (registered trademark) 3401ND", manufactured by TOYOBO Co., Ltd., basis weight 40 g/m²)

### Preparation Example 1 (Preparation of PP Composition)

The component a, the component b, and the component c were mixed at a proportion of 68% by mass, 30% by mass, and 2% by mass, respectively, and melt-kneaded (230°C) to prepare pellets of a polypropylene-based resin composition (PP composition).

### Comparative Preparation Example 1

Pellets of a polypropylene-based resin composition (PP composition) were prepared in the same manner as in Preparation Example 1 except that the component b and the component c were not used.

### Example 1

A method for producing a composite sheet 30 of the present invention will be described below with reference to Fig. 2. Note that Fig. 2 shows a layer structure before the glass fiber mat is impregnated with the thermoplastic resin composition.

The pellets of the PP composition granulated in Preparation Example 1 were placed in an extruder, melted, and then extruded into a sheet shape, and a glass fiber mat 32 was laminated on an extruded sheet-shaped PP sheet 31 by sandwiching the glass fiber mat 32 from both sides. Further, a PET nonwoven fabric 34 was laminated on both surfaces thereof, and a PP sheet 33 was laminated on both surfaces thereof so as to be the outermost layer, and then heated and pressurized at 230°C for 1 minute and 30 seconds while applying a pressure of 0.3 MPa using a laminator, and then cooled and solidified to obtain a resin-impregnated sheet (thickness: 2.5 mm). The PP sheet was impregnated into the glass fiber mat to obtain an integrated resin-impregnated sheet. The mass ratio in the resin-impregnated sheet was PP sheet:PET nonwoven fabric:glass fiber mat = 25:1:16. The resin-impregnated sheet was expanded by heating at 220°C for 2 minutes, and was pressurized and compressed in a mold adjusted to have a predetermined thickness, thereby obtaining a composite sheet having a density of 0.67 g/cm³. The results of evaluation by the above method are shown in Table 1. The thickness of the composite sheet before heating in the flame shielding test was 5.4 mm, and the thickness after heating was 10.1 mm. The expansion ratio before and after the heating test was 1.9 times. In addition, when the cross section of the composite sheet was observed, a plurality of voids having a cross-sectional area of 0.01 mm or more were observed. The average value of the cross-sectional areas of the voids having a cross-sectional area of 0.01 mm or more was 0.21 mm².

### Example 2

A composite sheet having a density of 0.84 g/cm³ was obtained in the same manner as in Example 1, except that the mold was adjusted to have a predetermined thickness. The results of the evaluation performed in the same manner as in Example 1 are shown in Table 1. The thickness of the composite sheet before heating in the flame shielding test was 4.3 mm, and the thickness after heating was 8.3 mm. The expansion ratio before and after the heating test was 1.9 times. In addition, the average value of the cross-sectional areas of the voids having a cross-sectional area of 0.01 mm or more obtained by observing the cross section of the composite sheet was 0.15 mm².

### Example 3

A composite sheet having a density of 1.12 g/cm³ was obtained in the same manner as in Example 1, except that the mold was adjusted to have a predetermined thickness. The results of the evaluation performed in the same manner as in Example 1 are shown in Table 1. The thickness of the composite sheet before heating in the flame shielding test was 3.3 mm, and the thickness after heating was 10.1 mm. The expansion ratio before and after the heating test was 3.1 times. In addition, the average value of the cross-sectional areas of the voids having a cross-sectional area of 0.01 mm or more obtained by observing the cross section of the composite sheet was 0.06 mm².

### Comparative Example 1

A composite sheet was obtained in the same manner as in Example 1, except that the pellets of the PP composition granulated in Comparative Preparation Example 1 were used instead of the pellets of the PP composition granulated in Preparation Example 1. The density of the composite sheet was 0.61 g/cm³. The evaluation results are shown in Table 1. The thickness of the composite sheet before heating in the flame shielding test was 5.3 mm. Since the flame penetrated to the back surface and holes were opened in the flame shielding test, the thickness after heating could not be measured.

### Comparative Example 2

A composite sheet having a density of 0.76 g/cm³ was obtained in the same manner as in Comparative Example 1, except that the mold was adjusted to have a predetermined thickness. The results of the evaluation performed in the same manner as in Example 1 are shown in Table 1. The thickness of the composite sheet before heating in the flame shielding test was 4.3 mm. Since the flame penetrated to the back surface and holes were opened in the flame shielding test, the thickness after heating could not be measured.

### Comparative Example 3

A composite sheet having a density of 1.02 g/cm³ was obtained in the same manner as in Comparative Example 1, except that the mold was adjusted to have a predetermined thickness. The results of the evaluation performed in the same manner as in Example 1 are shown in Table 1. The thickness of the composite sheet before heating in the flame shielding test was 3.3 mm. Since the flame penetrated to the back surface and holes were opened in the flame shielding test, the thickness after heating could not be measured.

**Table 1**

| | Density (g/cm³) | Flame retardance | Flame shielding property (presence or absence of penetration) | Heat insulating property | |
|---|---|---|---|---|---|
| | | UL94 test | | Maximum temperature up to 600 seconds (°C) | Time to reach 500°C (sec) |
| Example 1 | 0.67 | Equivalent to V- 1 | Not penetrated | 540 | 306 |
| Example 2 | 0.84 | Equivalent to V- 1 | Not penetrated | 525 | 303 |
| Example 3 | 1.12 | Equivalent to V- 1 | Not penetrated | 521 | 295 |
| Comparative Example 1 | 0.61 | Not satisfying V- 1 | Penetrated | 855 | 75 |
| Comparative Example 2 | 0.76 | - | Penetrated | 903 | 76 |
| Comparative Example 3 | 1.02 | Not satisfying V-1 | Penetrated | 810 | 86 |

**Table 1 (continued)**

| | Flame shielding test | | | Average value of cross-sectional areas of voids (mm²) | Physical properties after firing | |
|---|---|---|---|---|---|---|
| | Before heating (mm) | After heating (mm) | Thickness ratio before and after heating (times) | | Bending strength (kPa) | Thermal conductivity (W/mk) |
| Example 1 | 5.4 | 10.1 | 1.9 | 0.21 | 156 | 0.058 |
| Example 2 | 4.3 | 8.3 | 1.9 | 0.15 | - | - |
| Example 3 | 3.3 | 10.1 | 3.1 | 0.06 | 185 | 0.060 |
| Comparative Example 1 | 5.3 | Not measurable | - | - | Not measurable | 0.054 |
| Comparative Example 2 | 4.3 | Not measurable | - | - | - | - |
| Comparative Example 3 | 3.3 | Not measurable | - | - | Not measurable | 0.056 |

As shown in Examples 1 to 3, the composite sheet of the present invention had excellent flame shielding property, and the flame was blocked even at the time point when 15 minutes had elapsed. Further, in the UL94 test, the results were equivalent to V-1.

In contrast, the flame penetrated to the back surface in about 87 seconds in Comparative Example 1, in about 94 seconds in Comparative Example 2, and in about 95 seconds in Comparative Example 3. In addition, Comparative Examples 1 and 3 did not satisfy the V-1 standard.

Further, as shown in Table 1, the composite sheets of Examples had good bending strength after firing and high thermal conductivity after firing as compared with the composite sheets of Comparative Examples.

When the bending strength after firing is good, it is possible to exhibit resistance to shock waves derived from an explosion when a battery having a high energy density runs away. In addition, when the thermal conductivity after firing is high, it is possible to suppress an increase in temperature on the back surface side of the flame contact surface by efficiently transporting the quantity of heat given by the flame contact to the opposite side of the flame contact surface and radiating the heat.

### Industrial Applicability

As described above, the composite sheet of the present invention has high flame shielding property and flame resistance, has a low density, and is excellent in light weight property. Therefore, the composite sheet is useful as a material for various industrial parts in which high safety is required, such as aircraft, ships, automobile parts, electrical and electronic equipment parts, and building materials. In particular, it can be suitably used for various housings and casings of batteries in which metals have been conventionally used, and it is expected to contribute to safety of automobiles, improve energy efficiency by weight reduction, reduce CO₂ emissions, and the like.

In addition, since the composite sheet of the present invention has excellent flame shielding property and is mainly composed of resins, the composite sheet of the present invention has excellent processability and is lightweight. Therefore, a structure using the composite sheet of the present invention is useful as an electric mobility.

### Reference Signs List

- 10:: Laminate
- 11:: Glass fiber mat
- 12:: Surface sheet
- 13:: Thermoplastic resin sheet
- 20:: Resin-impregnated sheet
- 30:: Composite sheet
- 31:: PP sheet
- 32:: Glass fiber mat
- 33:: PP sheet
- 34:: PET nonwoven fabric

## Claims

1. A composite sheet comprising a thermoplastic resin composition (X) and inorganic fibers (Y), wherein the thermoplastic resin composition (X) comprises a thermoplastic resin and a thermally expandable flame retardant, and the composite sheet has a density of 1.3 g/cm³ or less.

2. The composite sheet according to claim 1, wherein a plurality of voids having a cross-sectional area of 0.01 mm² or more are present when a cut surface is observed, and an average value of the cross-sectional areas of the voids having a cross-sectional area of 0.01 mm² or more is 0.03 mm² or more and 0.8 mm² or less.

3. The composite sheet according to claim 1, wherein a thickness ratio before and after heating at 1200°C for 15 minutes (thickness after high temperature test/thickness before high temperature test) is 5 times or less.

4. The composite sheet according to claim 1, further comprising a surface sheet, wherein the surface sheet comprises a nonwoven fabric made of resin fibers.

5. The composite sheet according to claim 1, wherein the thermally expandable flame retardant comprises a phosphorus-based flame retardant.

6. The composite sheet according to claim 1 or 4, wherein the thermoplastic resin constituting the thermoplastic resin composition (X) comprises a polyolefin resin.

7. The composite sheet according to claim 1, wherein the thermoplastic resin composition (X) further comprises a dispersant.

8. The composite sheet according to claim 7, wherein the dispersant comprises a copolymer of an α-olefin and an unsaturated carboxylic acid.

9. The composite sheet according to claim 7 or 8, wherein a content of the dispersant is more than 0 and 25 parts by mass or less with respect to 100 parts by mass of the thermally expandable flame retardant.

10. The composite sheet according to claim 1 or 4, wherein the inorganic fibers (Y) comprise at least one selected from glass fibers, ceramic fibers, metal fibers, and metal oxide fibers.

11. The composite sheet according to claim 1 or 4, wherein the composite sheet is obtained by impregnating a mat made of the inorganic fibers (Y) with the thermoplastic resin composition (X).

12. A method for producing the composite sheet according to claim 1 or 4, comprising: laminating a sheet made of the thermoplastic resin composition (X) on a mat made of the inorganic fibers (Y) to obtain a laminate; and heating and melting the laminate to impregnate the thermoplastic resin composition (X).

13. The method for producing the composite sheet according to claim 12, wherein the mat made of the inorganic fibers (Y) is laminated so as to be between two sheets made of the thermoplastic resin composition (X).

14. A molded body obtained by molding the composite sheet according to claim 1 or 4.

15. The molded body according to claim 14, which is used for a battery case.
